# EUROPEAN PATENT SPECIFICATION

(11) **EP 3 581 398 B1**
(45) Date of publication and mention of the grant of the patent: **16.09.2020**
(21) Application number: 19179417.1
(22) Date of filing: 11.06.2019
(51) Int. Cl.: B60C 1/00, C08C 19/22, C08C 19/25, C08C 19/44, C08F 236/10, C08L 9/00, C08L 15/00, C08K 5/01

(54) **RUBBER COMPOSITION FOR TIRE, AND PNEUMATIC TIRE**
KAUTSCHUKZUSAMMENSETZUNG FÜR REIFEN, UND REIFEN
COMPOSITION DE CAOUTCHOUC POUR PNEUMATIQUE, ET PNEUMATIQUE

(30) Priority: 11.06.2018 JP 2018111088
(43) Date of publication of application: 18.12.2019
(73) Proprietor: Sumitomo Rubber Industries, Ltd., Kobe-shi, Hyogo-ken 651-0072 (JP)
(72) Inventor: MIYAZAKI, Tatsuya, Kobe-shi, Hyogo 651-0072 (JP)
(74) Representative: Manitz Finsterwald Patent- und Rechtsanwaltspartnerschaft mbB

(56) References cited:
- EP-A1- 2 674 454
- US-A1- 2012 016 056

## Description

### BACKGROUND OF THE INVENTION

### Field of the Invention

The present invention relates to a rubber composition for a tire, and a pneumatic tire.

### Description of the Background Art

Tires are required to have wet grip performance to ensure safety and the like. In order to meet this need, styrene-butadiene rubber and silica are generally used. However, if styrene-butadiene rubber is used, low fuel consumption performance and wear resistance tend to be deteriorated.

As a method for improving wet grip performance, a method has been known in which resins such as α-methylstyrene resin and terpene resin are blended. In Japanese Patent No. 5424693, a resin containing a predetermined amount of indene is used. However, further improvement has been required in recent years.

### SUMMARY OF THE INVENTION

An object of the present invention is to provide: a rubber composition for a tire, which solves the above problem and which allows low fuel consumption performance, wet grip performance, and wear resistance to be improved in a balanced manner; and a pneumatic tire using the rubber composition.

The present invention is directed to a rubber composition for a tire, the rubber composition containing: a rubber component including a styrene-butadiene rubber having a styrene content not less than 25% by mass; an α-methylstyrene-indene copolymer resin having a weight-average molecular weight not greater than 400; and silica, wherein, per 100 parts by mass of the rubber component, an amount of the α-methylstyrene-indene copolymer resin is 0.1 to 100 parts by mass and an amount of the silica is not less than 80 parts by mass.

The above rubber composition preferably contains an indene resin having a weight-average molecular weight not greater than 400.

An amount of the styrene-butadiene rubber in 100% by mass of the rubber component is preferably not less than 10% by mass.

The above rubber composition preferably contains a silica having a nitrogen adsorption specific surface area of 170 to 300 m²/g.

An α-methylstyrene unit content of the α-methylstyrene-indene copolymer resin is preferably 15 to 70% by mol.

The present invention is also directed to a pneumatic tire produced by using the above rubber composition.

The present invention is the rubber composition for a tire, the rubber composition containing: a rubber component including a styrene-butadiene rubber having a styrene content not less than 25% by mass; an α-methylstyrene-indene copolymer resin having a weight-average molecular weight not greater than 400; and silica, wherein, per 100 parts by mass of the rubber component, an amount of the α-methylstyrene-indene copolymer resin is 0.1 to 100 parts by mass and an amount of the silica is not less than 80 parts by mass. Accordingly, low fuel consumption performance, wet grip performance, and wear resistance can be improved in a balanced manner.

### DESCRIPTION OF THE PREFERRED EMBODIMENTS

A rubber composition for a tire according to the present invention contains: a rubber component including a styrene-butadiene rubber (SBR) having a styrene content not less than 25% by mass; an α-methylstyrene-indene copolymer resin having a weight-average molecular weight (Mw) not greater than 400; and silica. Per 100 parts by mass of the rubber component, the amount of the α-methylstyrene-indene copolymer resin is 0.1 to 100 parts by mass and the amount of the silica is not less than 80 parts by mass.

The aforementioned effect is obtained with the above rubber composition, and is inferred to be realized owing to the following characteristics.

Since the α-methylstyrene-indene copolymer resin has styrene within the structure thereof, the α-methylstyrene-indene copolymer resin has high compatibility (affinity) with the SBR also having styrene within the structure thereof, and thus can be easily dispersed in the SBR and is unlikely to be separated from the SBR during running.

In addition, since the α-methylstyrene-indene copolymer resin has a Mw not greater than 400, the α-methylstyrene-indene copolymer resin easily bleeds at 10 to 30°C which corresponds to a temperature during running on a wet road.

Furthermore, since the α-methylstyrene-indene copolymer resin has a higher kinematic viscosity at 25 to 30°C than generally used TDAE oil, the Hs (hardness) of the rubber composition can be kept high. In addition, since a bleed object of the α-methylstyrene-indene copolymer resin is homogeneous as compared to TDAE oil, the grip is stabilized.

It is considered that the low fuel consumption performance, the wet grip performance, and the wear resistance are improved in a balanced manner owing to the above characteristics.

The above rubber composition contains an SBR as the rubber component.

The SBR is not particularly limited. For example, emulsion-polymerized styrene-butadiene rubber (E-SBR), solution-polymerized styrene-butadiene rubber (S-SBR), or the like may be used as the SBR. As commercially available products, products of Sumitomo Chemical Co., Ltd., JSR Corporation, Asahi Kasei Corporation, Zeon Corporation, etc., can be used. One of these SBRs may be used singly, or two or more of these SBRs may be used in combination.

The SBR may be either unmodified SBR or modified SBR.

The modified SBR only needs to be an SBR having a functional group that interacts with a filler such as silica. Examples of the modified SBR include an end-modified SBR obtained by modifying at least one end of SBR with a compound (modifier) having the above functional group (end-modified SBR having the above functional group at an end thereof), a main chain-modified SBR having the above functional group in the main chain thereof, a main chain/end-modified SBR having the above functional group in the main chain and at an end thereof (for example, a main chain/end-modified SBR that has the above functional group in the main chain thereof and has at least one end modified with the above modifier), and an end-modified SBR that is modified (coupled) by using a multifunctional compound having two or more epoxy groups in the molecule thereof and to which a hydroxyl group or an epoxy group is introduced.

Examples of the above functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may have substituents. Among the functional groups, an amino group (preferably, an amino group obtained by substituting a hydrogen atom of an amino group with an alkyl group having 1 to 6 carbon atoms), an alkoxy group (preferably, an alkoxy group having 1 to 6 carbon atoms), and an alkoxysilyl group (preferably, an alkoxysilyl group having 1 to 6 carbon atoms), are preferable.

As the modified SBR, an SBR modified with a compound (modifier) represented by the following formula is particularly suitable. 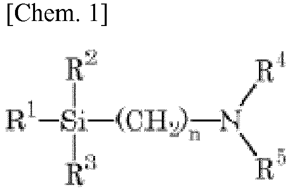 (wherein, R¹, R², and R³ are the same or different from each other, and each represent an alkyl group, an alkoxy group, a silyloxy group, an acetal group, a carboxyl group (-COOH), a mercapto group (-SH), or a derivative thereof. R⁴ and R⁵ are the same or different from each other, and each represent a hydrogen atom or an alkyl group. R⁴ and R⁵ may be linked together to form a ring structure together with the nitrogen atom. "n" represents an integer.)

As the modified SBR modified with a compound (modifier) represented by the above formula, an SBR obtained by modifying the polymerization ends (active ends) of solution-polymerized styrene-butadiene rubber (S-SBR) with a compound represented by the above formula (a modified SBR disclosed in Japanese Laid-Open Patent Publication No. 2010-111753, etc.) is suitably used.

As R¹, R², and R³, an alkoxy group (an alkoxy group preferably having 1 to 8 carbon atoms and more preferably having 1 to 4 carbon atoms) is suitable. As R⁴ and R⁵, an alkyl group (an alkyl group preferably having 1 to 3 carbon atoms) is suitable. "n" is preferably 1 to 5, more preferably 2 to 4, and further preferably 3. In addition, when R⁴ and R⁵ are linked together to form a ring structure together with the nitrogen atom, a four to eight-membered ring is preferably formed. Examples of the alkoxy group include cycloalkoxy groups (a cyclohexyloxy group, etc.) and aryloxy groups (a phenoxy group, a benzyloxy group, etc.).

Specific examples of the above modifier include 2-dimethylaminoethyl trimethoxysilane, 3-dimethylaminopropyl trimethoxysilane, 2-dimethylaminoethyl triethoxysilane, 3-dimethylaminopropyl triethoxysilane, 2-diethylaminoethyl trimethoxysilane, 3-diethylaminopropyl trimethoxysilane, 2-diethylaminoethyl triethoxysilane, and 3-diethylaminopropyl triethoxysilane. Among the modifiers, 3-dimethylaminopropyl trimethoxysilane, 3-dimethylaminopropyl triethoxysilane, and 3-diethylaminopropyl trimethoxysilane are preferable. These modifiers may be used individually, or two or more of these modifiers may be used in combination.

As the modified SBR, a modified SBR modified with the following compound (modifier) can also be suitably used. Examples of the modifier include: polyglycidyl ethers of polyhydric alcohols, such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups, such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3-bisaminomethylcyclohexane;

Amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane;

Sulfide group-containing silane compounds such as (trimethylsilyl)[3-(trimethoxysilyl)propyl] sulfide, (trimethylsilyl)[3-(triethoxysilyl)propyl]sulfide, (trimethylsilyl)[3-(tripropoxysilyl)propyl] sulfide, (trimethylsilyl) [3-(tributoxysilyl)propyl]sulfide, (trimethylsilyl)[3-(methyldimethoxysilyl)propyl]sulfide, (trimethylsilyl)[3-(methyldiethoxysilyl)propyl] sulfide, (trimethylsilyl) [3 - (methyldipropoxysilyl)propyl]sulfide, and (trimethylsilyl)[3-(methyldibutoxysilyl)propyl] sulfide;

N-substituted aziridine compounds such as ethyleneimine and propyleneimine; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl)aminoethyltrimethoxysilane, and N,N-bis(trimethylsilyl)aminoethyltriethoxysilane; (thio)benzophenone compounds having an amino group and/or a substituted amino group, such as 4-N,N-dimethylaminobenzophenone, 4-N,N-dit-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-co-laurolactam, N-vinyl-co-laurolactam, N-methyl-β-propiolactam, and N-phenyl-β-propiolactam; and moreover,

N,N-bis-(2,3-epoxypropoxy)-aniline, 4,4-methylene-bis-(N,N-glycidyl aniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone.

Modification with the above compounds (modifiers) can be carried out by a known method.

The styrene content of the SBR only needs to be not less than 25% by mass, but is preferably not less than 26% by mass, and is preferably not greater than 60% by mass and more preferably not greater than 50% by mass. When the styrene content is within the above range, compatibility (affinity) with the above α-methylstyrene-indene copolymer resin tends to be particularly excellent.

The styrene content of the SBR can be measured by ¹H-NMR measurement.

The vinyl content of the SBR is preferably not less than 20% by mass and more preferably not less than 25% by mass, and is preferably not greater than 80% by mass and more preferably not greater than 60% by mass. When the vinyl content is within the above range, the advantageous effect tends to be more favorably obtained. The vinyl content (1,2-bond butadiene unit content) of the SBR can be measured by infrared absorption spectrometry.

The amount of the SBR in 100% by mass of the rubber component is preferably not less than 10% by mass, more preferably not less than 40% by mass, and further preferably not less than 70% by mass, and is preferably not greater than 90% by mass and more preferably not greater than 80% by mass. When the amount of the SBR is within the above range, entanglement with the above α-methylstyrene-indene copolymer resin easily occurs, whereby the advantageous effect tends to be more favorably obtained.

Examples of usable rubber components other than the SBR include diene rubbers such as butadiene rubber (BR), isoprene-based rubber, acrylonitrile-butadiene rubber (NBR), chloroprene rubber (CR), isobutylene-isoprene-rubber (IIR), and styrene-isoprene-butadiene copolymer rubber (SIBR). One of these rubber components may be used singly, or two or more of these rubber components may be used in combination. Among the rubber components, the BR and the isoprene-based rubber are preferable.

The BR is not particularly limited, and examples thereof include BRs generally used in the tire industry, such as a BR having a high cis content (high-cis BR), a BR that contains 1,2-syndiotactic polybutadiene crystal (SPB-containing BR), a butadiene rubber synthesized by using a rare earth element catalyst (rare earth BR), and a tin-modified butadiene rubber modified with a tin compound (tin-modified BR). The tin-modified BR is normally a BR having a low cis content (low-cis BR). The BR may be either unmodified BR or modified BR, and examples of the modified BR include a modified BR having the aforementioned functional group introduced thereto. The modified BR may be either low-cis BR or high-cis BR. As commercially available products, products of Ube Industries, Ltd., JSR Corporation, Asahi Kasei Corporation, Zeon Corporation, etc., can be used. These BRs may be used individually, or two or more of these BRs may be used in combination. The rare earth BR is preferable from the standpoint of wear resistance, and the modified BR is preferable from the standpoint of low fuel consumption performance.

As the rare earth BR, conventionally known rare earth BRs can be used, and examples thereof include rare earth BRs each synthesized by using a rare earth element catalyst (a catalyst containing a lanthanide rare earth element compound, an organoaluminum compound, an aluminoxane, or a halogen-containing compound, optionally with a Lewis base) or the like. Among the rare earth BRs, a butadiene rubber synthesized by using a neodymium (Nd)-based catalyst that uses a neodymium-containing compound as the lanthanide rare earth element compound (Nd-based BR), is preferable.

The cis content of the BR is preferably not less than 90% by mass, more preferably not less than 95% by mass, and further preferably not less than 97% by mass. The upper limit of the cis content is not particularly limited. When the cis content is within the above range, the advantageous effect tends to be more favorably obtained.

The cis content of the BR can be measured by infrared absorption spectrometry.

The vinyl content of the BR is preferably not greater than 10% by mass, more preferably not greater than 5% by mass, and further preferably not greater than 1% by mass. The lower limit of the vinyl content is not particularly limited. When the vinyl content is within the above range, the advantageous effect tends to be more favorably obtained.

The vinyl content (1,2-bond butadiene unit content) of the BR can be measured by infrared absorption spectrometry.

The glass transition temperature (Tg) of the BR is preferably not less than -160°C and more preferably not less than -130°C, and is preferably not greater than -60°C and more preferably not greater than -90°C.

The glass transition temperature of the BR is a value measured according to JIS-K7121 under a condition of a temperature rise rate of 10°C/min by using a differential scanning calorimeter (Q200) manufactured by TA Instruments Japan Inc.

In the case where the BR is contained, the amount of the BR in 100% by mass of the rubber component is preferably not less than 10% by mass and more preferably not less than 20% by mass, and is preferably not greater than 90% by mass, more preferably not greater than 60% by mass, and further preferably not greater than 30% by mass. When the amount of the BR is within the above range, the advantageous effect tends to be more favorably obtained.

Examples of the isoprene-based rubber include natural rubber (NR), isoprene rubber (IR), reformed NR, modified NR, and modified IR. As the NR, NRs generally used in the tire industry, such as SIR20, RSS#3, and TSR20 can be used. As the IR, IRs generally used in the tire industry, such as IR2200 can be used. Examples of the reformed NR include deproteinized natural rubber (DPNR) and ultra pure natural rubber (UPNR). Examples of the modified NR include epoxidized natural rubber (ENR), hydrogenated natural rubber (HNR), and grafted natural rubber. Examples of the modified IR include epoxidized isoprene rubber, hydrogenated isoprene rubber, and grafted isoprene rubber. One of these isoprene-based rubbers may be used singly, or two or more of these isoprene-based rubbers may be used in combination.

In the case where the isoprene-based rubber is contained, the amount of the isoprene-based rubber in 100% by mass of the rubber component is preferably not less than 5% by mass and more preferably not less than 7% by mass, and is preferably not greater than 30% by mass and more preferably not greater than 20% by mass. When the amount of the isoprene-based rubber is within the above range, the advantageous effect tends to be more favorably obtained.

The above rubber composition contains an α-methylstyrene-indene copolymer resin having a weight-average molecular weight (Mw) not greater than 400.

The α-methylstyrene-indene copolymer resin is a copolymer containing, as main components, a constituent unit derived from α-methylstyrene (a-methylstyrene unit) and a constituent unit derived from indene (indene unit), and is in a liquid state at normal temperature (25°C), and examples thereof include a dimer formed of one α-methylstyrene molecule and one indene molecule, and a trimer formed of two α-methylstyrene molecules and one indene molecule, or one α-methylstyrene molecule and two indene molecules. One of these α-methylstyrene-indene copolymer resins may be used singly, or two or more of these α-methylstyrene-indene copolymer resins may be used in combination. However, using two or more thereof in combination is preferable.

The α-methylstyrene-indene copolymer resin can be produced by a general polymerization method.

The Mw of the α-methylstyrene-indene copolymer resin only needs to be not greater than 400, but is preferably not greater than 380, and is preferably not less than 150 and more preferably not less than 200. When the Mw of the α-methylstyrene-indene copolymer resin is within the above range, appropriate kinematic viscosity and blooming property tend to be obtained.

The Mw can be obtained by converting, based on polystyrene standard, a value measured by gel permeation chromatography (GPC) (GPC-8000 series manufactured by Tosoh Corporation, detector: differential refractometer, column: TSKGEL SUPERMULTIPORE HZ-M manufactured by Tosoh Corporation).

The α-methylstyrene unit content of the α-methylstyrene-indene copolymer resin is preferably not less than 15% by mol and more preferably not less than 30% by mol, and is preferably not greater than 70% by mol and more preferably not greater than 65% by mol. When the α-methylstyrene unit content is within the above range, compatibility (affinity) with the SBR tends to be particularly excellent.

From the same standpoint, the total value of the α-methylstyrene unit content and the indene unit content of the α-methylstyrene-indene copolymer resin is preferably not less than 80% by mol, more preferably not less than 90% by mol, and further preferably not less than 95% by mol, and may be 100% by mol.

The amount of the α-methylstyrene-indene copolymer resin per 100 parts by mass of the rubber component only needs to be 0.1 to 100 parts by mass, but is preferably not less than 5 parts by mass, more preferably not less than 10 parts by mass, further preferably not less than 15 parts by mass, and particularly preferably not less than 20 parts by mass, and is preferably not greater than 50 parts by mass and more preferably not greater than 40 parts by mass. When the amount of the α-methylstyrene-indene copolymer resin is within the above range, the advantageous effect tends to be more favorably obtained.

The above rubber composition preferably contains an indene resin having a weight-average molecular weight (Mw) not greater than 400. The indene resin has high polarity, and thus is hard to be dispersed in rubber when being used solely. However, when being used in combination with the above α-methylstyrene-indene copolymer resin, the indene resin can be favorably dispersed in rubber. By the indene resin being uniformly dispersed in rubber, the amount and the viscoelasticity of a bleed object (bleed film) to be formed on the rubber surface increase, whereby wet grip performance can be further improved.

The indene resin is a polymer or a copolymer containing an indene unit as a main component, and is in a liquid state at normal temperature (25°C), and examples of the indene resin include a dimer formed of two indene molecules, and a trimer formed of three indene molecules. One of these indene resins may be used singly, or two or more of these indene resins may be used in combination. However, using two or more thereof in combination is preferable.

The indene resin can be produced by a general polymerization method.

The Mw of the indene resin only needs to be not greater than 400, but is preferably not greater than 380, and is preferably not less than 150 and more preferably not less than 200. When the Mw of the indene resin is within the above range, appropriate kinematic viscosity tends to be obtained.

The indene unit content of the indene resin is preferably not less than 80% by mol, more preferably not less than 90% by mol, and further preferably not less than 95% by mol, and may be 100% by mol. When the indene unit content is within the above range, the advantageous effect tends to be more favorably obtained.

In the case where the indene resin is contained, the amount of the indene resin per 100 parts by mass of the rubber component is preferably not less than 1 part by mass and more preferably not less than 2 parts by mass, and is preferably not greater than 20 parts by mass and more preferably not greater than 15 parts by mass. When the amount of the indene resin is within the above range, the advantageous effect tends to be more favorably obtained.

From the same standpoint, the total amount of the above α-methylstyrene-indene copolymer resin and the indene resin per 100 parts by mass of the rubber component, is preferably not less than 5 parts by mass, more preferably not less than 10 parts by mass, further preferably not less than 15 parts by mass, and particularly preferably not less than 20 parts by mass, and is preferably not greater than 50 parts by mass and more preferably not greater than 40 parts by mass.

The above rubber composition may contain another resin in addition to the above α-methylstyrene-indene copolymer resin and the above indene resin. The another resin is not particularly limited as long as being generally used in the tire industry, and examples thereof include styrene-based resins, terpene-based resins, rosin-based resins, coumarone-indene resins, p-t-butylphenol acetylene resins, acrylic-based resins, C5 resins, and C9 resins. As commercially available products, products of Maruzen Petrochemical Co., Ltd., Sumitomo Bakelite Co., Ltd., Yasuhara Chemical Co., Ltd., Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd., etc., can be used. These resins may be used individually, or two or more of these resins may be used in combination.

The above rubber composition contains silica.

Examples of the silica include dry-process silica (silicic anhydride) and wet-process silica (hydrous silicic acid), and wet-process silica is preferable for the reason that it has a higher silanol group content. As commercially available products, products of Degussa, Rhodia, Tosoh Silica Corporation, Solvay Japan, Ltd., Tokuyama Corporation, etc., can be used. One of these silicas may be used singly, or two or more of these silicas may be used in combination.

The nitrogen adsorption specific surface area (N₂SA) of the silica is preferably not less than 170 m²/g, more preferably not less than 200 m²/g, further preferably not less than 230 m²/g, and particularly preferably not less than 250 m²/g, and is preferably not greater than 300 m²/g and more preferably not greater than 280 m²/g. When the nitrogen adsorption specific surface area (N₂SA) of the silica is within the above range, the advantageous effect tends to be more favorably obtained.

The nitrogen adsorption specific surface area of the silica is a value measured by the BET method in compliance with ASTM D3037-81.

If a silica (fine particle silica) having an N₂SA not less than 200 m²/g is used, the Hs and the viscosity of the rubber composition become high, and thus the amount of the silica needs to be reduced. However, wet grip performance tends to be deteriorated if the amount of the silica is reduced. On the other hand, in the above rubber composition, since the above α-methylstyrene-indene copolymer resin is blended therein, favorable wet grip performance can be ensured even if the amount of the silica is reduced.

In addition, if such a fine particle silica is used, the Hs and the viscosity of the rubber composition sometimes cannot be adjusted to be within an appropriate range just by reducing the amount of the silica. However, in the above rubber composition, since the above α-methylstyrene-indene copolymer resin is blended therein, the Hs and the viscosity of the rubber composition can be adjusted to be within an appropriate range.

The amount of the silica per 100 parts by mass of the rubber component only needs to be not less than 80 parts by mass, but is preferably not less than 90 parts by mass, and is preferably not greater than 150 parts by mass, more preferably not greater than 130 parts by mass, and further preferably not greater than 120 parts by mass. When the amount of the silica is within the above range, the advantageous effect tends to be more favorably obtained.

The above rubber composition preferably contains a silane coupling agent. Accordingly, the advantageous effect tends to be more favorably obtained.

The silane coupling agent is not particularly limited, and examples thereof include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3 -trimethoxysilylpropyl)disulfide, bis(2-trimethoxysilylethyl)disulfide, bis(4-trimethoxysilylbutyl)disulfide, 3 -trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. As commercially available products, products of Degussa, Momentive, Shin-Etsu Silicones, Tokyo Chemical Industry Co., Ltd., AZmax, Dow Corning Toray Co., Ltd., etc., can be used. These silane coupling agents may be used individually, or two or more of these silane coupling agents may be used in combination.

In the case where the silane coupling agent is contained, the amount of the silane coupling agent per 100 parts by mass of the silica is preferably not less than 3 parts by mass and more preferably not less than 6 parts by mass, and is preferably not greater than 15 parts by mass and more preferably not greater than 10 parts by mass. When the amount of the silane coupling agent is within the above range, the advantageous effect tends to be more favorably obtained.

The above rubber composition preferably contains carbon black. Accordingly, the advantageous effect tends to be more favorably obtained.

The carbon black is not particularly limited, and examples thereof include N134, N110, N220, N234, N219, N339, N330, N326, N351, N550, and N762. As commercially available products, products of Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon Co., etc., can be used. These carbon blacks may be used individually, or two or more of these carbon blacks may be used in combination.

In the case where the carbon black is contained, the amount of the carbon black per 100 parts by mass of the rubber component is preferably not less than 3 parts by mass and more preferably not less than 5 parts by mass, and is preferably not greater than 30 parts by mass and more preferably not greater than 15 parts by mass. When the amount of the carbon black is within the above range, the advantageous effect is more suitably obtained.

The above rubber composition may contain oil.

Examples of the oil include process oils, vegetable fats and oils, and mixtures thereof. As the process oil, for example, paraffinic process oil, aromatic process oil, or naphthenic process oil can be used. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. These oils may be used individually, or two or more of these oils may be used in combination.

The above α-methylstyrene-indene copolymer resin is in a liquid state at normal temperature (25°C). Thus, by blending the α-methylstyrene-indene copolymer resin in the above rubber composition, the amount of the oil can be reduced, and low fuel consumption performance and the like can be further improved. In the above rubber composition, the amount of the oil per 100 parts by mass of the rubber component is preferably not greater than 30 parts by mass, more preferably not greater than 25 parts by mass, and further preferably not greater than 20 parts by mass, and may be 0 parts by mass.

The above rubber composition may contain wax.

The wax is not particularly limited, and examples thereof include: petroleum waxes such as paraffin wax and a microcrystalline wax; natural waxes such as vegetable wax and animal wax; and synthetic waxes such as polymers of ethylene, propylene, and the like. As commercially available products, products of Ouchi Shinko Chemical Industrial Co., Ltd., NIPPON SEIRO CO., LTD., Seiko Chemical Co., Ltd., etc., can be used. One of these waxes may be used singly, or two or more of these waxes may be used in combination.

In the case where the wax is contained, the amount of the wax per 100 parts by mass of the rubber component is preferably not less than 1 part by mass and more preferably not less than 2 parts by mass, and is preferably not greater than 20 parts by mass and more preferably not greater than 10 parts by mass. When the amount of the wax is within the above range, the advantageous effect tends to be more favorably obtained.

The above rubber composition may contain an antioxidant.

Examples of the antioxidant include: naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol antioxidants such as 2,6-di-t-butyl-4-methylphenol and styrenated phenol; and bis-, tris-, and poly-phenol antioxidants such as tetrakis-[methylene-3-(3',5 '-di-t-butyl-4'-hydroxyphenyl)propionate]methane. As commercially available products, products of Seiko Chemical Co., Ltd., Sumitomo Chemical Co., Ltd., Ouchi Shinko Chemical Industrial Co., Ltd., Flexsys, etc., can be used. One of these antioxidants may be used singly, or two or more of these antioxidants may be used in combination. Among the antioxidants, the p-phenylenediamine antioxidants and the quinoline-based antioxidants are preferable.

In the case where the antioxidant is contained, the amount of the antioxidant per 100 parts by mass of the rubber component is preferably not less than 1 part by mass and more preferably not less than 3 parts by mass, and is preferably not greater than 10 parts by mass and more preferably not greater than 8 parts by mass. When the amount of the antioxidant is within the above range, the advantageous effect tends to be more favorably obtained.

The above rubber composition may contain fatty acid, particularly stearic acid.

As the stearic acid, conventionally known stearic acids can be used. As commercially available products, products of NOF Corporation, Kao Corporation, FUJIFILM Wako Pure Chemical Corporation, New Japan Chemical Co., Ltd., etc., can be used. One of these stearic acids may be used singly, or two or more of these stearic acids may be used in combination.

In the case where the stearic acid is contained, the amount of the stearic acid per 100 parts by mass of the rubber component is preferably not less than 1 part by mass and more preferably not less than 3 parts by mass, and is preferably not greater than 10 parts by mass and more preferably not greater than 5 parts by mass. When the amount of the stearic acid is within the above range, the advantageous effect tends to be more favorably obtained.

The above rubber composition may contain zinc oxide.

As the zinc oxide, conventionally known zinc oxides can be used. As commercially available products, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used. One of these zinc oxides may be used singly, or two or more of these zinc oxides may be used in combination.

In the case where the zinc oxide is contained, the amount of the zinc oxide per 100 parts by mass of the rubber component is preferably not less than 1 part by mass and more preferably not less than 2 parts by mass, and is preferably not greater than 10 parts by mass and more preferably not greater than 5 parts by mass. When the amount of the zinc oxide is within the above range, the advantageous effect tends to be more favorably obtained.

The above rubber composition may contain sulfur.

Examples of the sulfur include powdery sulfur, precipitated sulfur, colloidal sulfur, insoluble sulfur, highly dispersible sulfur, and soluble sulfur that are generally used in the rubber industry. As commercially available products, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used. These sulfurs may be used individually, or two or more of these sulfurs may be used in combination.

In the case where the sulfur is contained, the amount of the sulfur per 100 parts by mass of the rubber component is preferably not less than 0.6 parts by mass and more preferably not less than 1 part by mass, and is preferably not greater than 5 parts by mass and more preferably not greater than 3 parts by mass. When the amount of the sulfur is within the above range, the advantageous effect tends to be more favorably obtained.

The above rubber composition may contain a vulcanization accelerator.

Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. As commercially available products, products of Sumitomo Chemical Co., Ltd., Ouchi Shinko Chemical Industrial Co., Ltd., etc., can be used. These vulcanization accelerators may be used individually, or two or more of these vulcanization accelerators may be used in combination.

In the case where the vulcanization accelerator is contained, the amount of the vulcanization accelerator per 100 parts by mass of the rubber component is preferably not less than 1 part by mass and more preferably not less than 2 parts by mass, and is preferably not greater than 10 parts by mass and more preferably not greater than 8 parts by mass. When the amount of the vulcanization accelerator is within the above range, the advantageous effect tends to be more favorably obtained.

In addition to the aforementioned components, additives generally used in the tire industry may be further blended in the above rubber composition, and examples of the additives include: organic peroxides; and fillers such as calcium carbonate, talc, alumina, clay, aluminum hydroxide, and mica. The total amount of these additives per 100 parts by mass of the rubber component is preferably 0.1 to 200 parts by mass.

The above rubber composition can be produced by, for example, a method in which the aforementioned respective components are kneaded using rubber kneading devices such as an open roll and a Banbury mixer, and then the mixture is vulcanized.

Kneading conditions are as follows: in a base kneading step of kneading the additives other than a vulcanizing agent and the vulcanization accelerator, the kneading temperature is normally 100 to 180°C and preferably 120 to 170°C, and, in a finish kneading step of kneading the vulcanizing agent and the vulcanization accelerator, the kneading temperature is normally not greater than 120°C and preferably 85 to 110°C. In addition, a composition obtained by kneading the vulcanizing agent and the vulcanization accelerator is normally subjected to vulcanization processing such as press vulcanization. The vulcanization temperature is normally 140 to 190°C and preferably 150 to 185°C. The vulcanization time is normally 5 to 15 minutes.

The above rubber composition is suitably used for treads (cap treads), and may be used for members other than treads, for example, for sidewalls, base treads, under treads, clinch apexes, bead apexes, breaker cushion rubbers, carcass cord covering rubbers, insulations, chafers, inner liners, etc., and side reinforcing layers of run flat tires.

A pneumatic tire according to the present invention is manufactured by a general method using the above rubber composition.

Specifically, the above rubber composition is extruded in an unvulcanized state so as to correspond to the shape of each tire member, and is formed together with other tire members on a tire forming machine by a general method, thereby forming an unvulcanized tire. The unvulcanized tire is heated and pressurized in a vulcanizing machine, thereby obtaining a tire.

The above pneumatic tire can be used as a tire for a passenger car, a tire for a truck or a bus, a tire for a two-wheeled automotive vehicle, a high performance tire, and the like, and is particularly suitable for a tire for a passenger car.

### EXAMPLES

The present invention will be specifically described by means of Examples, but the present invention is not limited to these Examples.

Hereinafter, various chemicals used in Examples and Comparative Examples will be collectively described.

α-methylstyrene-indene copolymer resins 1 to 6, indene resins 1 and 2, α-methylstyrene resins 1 and 2, and styrene-indene copolymer resins 1 and 2 are test products fractionated as individual resin components through gel permeation chromatography (GPC).

### TSR20

### <BR>

CB25 (BR synthesized by using an Nd-based catalyst (Nd-based BR), cis content: 97% by mass, vinyl content: 0.7% by mass, Tg: -110°C) manufactured by LANXESS

### <Modified SBR for Silica>

End-modified SBR (styrene content: 27% by mass, vinyl content: 58% by mass, modifier: R¹, R² and R³ in the above formula = -OCH₃, R⁴ and R⁵ in the above formula = -CH₃, and "n" in the above formula = 3) produced in the following Production Example 1

### <Carbon Black N220>

SHOBLACK N220 (N₂SA: 114 m²/g) manufactured by Cabot Japan K.K.

### <Silica 1>

Z1085Gr (N₂SA: 80 m²/g) manufactured by Solvay

### <Silica 2>

ULTRASIL VN3 (N₂SA: 175 m²/g) manufactured by Evonik Degussa GmbH

### <Silica 3>

Premium SW (N₂SA: 275 m²/g) manufactured by Solvay

### <Silica 4>

U9000 (N₂SA: 235 m²/g) manufactured by Evonik Degussa GmbH

### <α-Methylstyrene-Indene Copolymer Resin 1>

Test product (a dimer formed of one α-methylstyrene molecule and one indene molecule, Mw: 236, α-methylstyrene unit content: 50% by mol)

### <α-Methylstyrene-Indene Copolymer Resin 2>

Test product (a trimer formed of one α-methylstyrene molecule and two indene molecules, Mw: 354, α-methylstyrene unit content: 33% by mol)

### <α-Methylstyrene-Indene Copolymer Resin 3>

Test product (a trimer formed of two α-methylstyrene molecules and one indene molecule, Mw: 354, α-methylstyrene unit content: 67% by mol)

### <Indene Resin 1>

Test product (a dimer formed of two indene molecules, Mw: 236)

### <Indene Resin 2>

Test product (a trimer formed of three indene molecules, Mw: 354)

### <α-Methylstyrene Resin 1>

Test product (a dimer formed of two α-methylstyrene molecules, Mw: 236)

### <α-Methylstyrene Resin 2>

Test product (a trimer formed of three α-methylstyrene molecules, Mw: 354)

### <α-Methylstyrene-Indene Copolymer Resin 4>

Test product (a tetramer formed of one α-methylstyrene molecule and three indene molecules, Mw: 472, α-methylstyrene unit content: 25% by mol)

### <α-Methylstyrene-Indene Copolymer Resin 5>

Test product (a tetramer formed of two α-methylstyrene molecules and two indene molecules, Mw: 472, α-methylstyrene unit content: 50% by mol)

### <α-Methylstyrene-Indene Copolymer Resin 6>

Test product (a pentamer formed of two α-methylstyrene molecules and three indene molecules, Mw: 590, α-methylstyrene unit content: 40% by mol)

### <Styrene-Indene Copolymer Resin 1>

Test product (a dimer formed of one styrene molecule and one indene molecule, Mw: 222)

### <Styrene-Indene Copolymer Resin 2>

Test product (a trimer formed of one styrene molecule and two indene molecules, Mw: 340)

### <α-Methylstyrene-Styrene Copolymer Resin>

Sylvatraxx 4401 (a copolymer of α-methylstyrene and styrene) manufactured by Arizona Chemical Company

### <Aromatic Modified Terpene Resin>

YS resin TO-125 (a copolymer of styrene and a terpene compound, softening point: 125°C) manufactured by Yasuhara Chemical Co., Ltd.

### <Coumarone-Indene Copolymer Resin>

ESCURON V120 (a copolymer of coumarone, indene, styrene, and phenol (a copolymer containing a coal-derived constituent unit and a petroleum-derived constituent unit as main components), softening point: 120°C) manufactured by NITTO CHEMICAL CO., LTD.

### <Process Oil>

Vivatec 500 (TDAE oil) manufactured by H&R

### <Paraffin Wax>

Ozoace 0355 manufactured by NIPPON SEIRO CO., LTD.

### <Antioxidant 6PPD>

ANTIGENE 6C (N-(1,3-dimethylbutyl)-N'-phenyl-p-phenylenediamine) manufactured by Sumitomo Chemical Co., Ltd.

### <Antioxidant TMQ>

NOCRAC 224 (2,2,4-trimethyl-1,2-dihydroquinoline polymer) manufactured by Ouchi Shinko Chemical Industrial Co., Ltd.

### <Stearic Acid>

Stearic acid "Tsubaki" manufactured by NOF Corporation

### <Zinc Oxide>

Ginrei R manufactured by Toho Zinc Co., Ltd.

### <Silane Coupling Agent>

Si75 (bis(3-triethoxysilylpropyl)disulfide) manufactured by Evonik Degussa GmbH

### <Sulfur>

HK-200-5 (a powdery sulfur containing 5% of oil) manufactured by Hosoi Chemical Industry Co., Ltd.

### <Vulcanization Accelerator TBBS>

NOCCELER CZ (N-cyclohexyl-2-benzothiazolyl sulfenamide) manufactured by Ouchi Shinko Chemical Industrial Co., Ltd.

### <Vulcanization Accelerator DPG>

NOCCELER D (diphenylguanidine) manufactured by Ouchi Shinko Chemical Industrial Co., Ltd.

### <Production of End Modifier>

20.8 g of 3-(N,N-dimethylamino)propyltrimethoxysilane (manufactured by AZmax) was put into a 250-ml measuring flask in a nitrogen atmosphere, and hexanoic anhydride (manufactured by Kanto Chemical Co., Inc.) was added thereto such that the total amount was 250 ml, thereby producing an end modifier.

### <Production Example 1>

18 L of n-hexane, 540 g of styrene (manufactured by Kanto Chemical Co., Inc.), 1460 g of butadiene, and 17 mmol of tetramethylethylenediamine were added to a 30-L pressure-resistant vessel sufficiently purged with nitrogen, and the temperature of the mixture was increased to 40°C. Next, 3.5 ml of a 0.4-mol/L silicon tetrachloride/hexane solution was added to the mixture, and the mixture was stirred for 30 minutes. Next, 10.5 mL of butyllithium was added to the mixture, and then the temperature of the mixture was increased to 50°C and the mixture was stirred for three hours. Next, 30 mL of the above end modifier was added to the mixture, and the mixture was stirred for 30 minutes. 2 mL of methanol (manufactured by Kanto Chemical Co., Inc.) in which 0.2 g of 2,6-tert-butyl-p-cresol (manufactured by Ouchi Shinko Chemical Industrial Co., Ltd.) had been dissolved was added to the reaction solution, and then the reaction solution was put into a stainless-steel vessel containing 18L of methanol, to collect aggregates. The obtained aggregates were dried under reduced pressure for 24 hours, thereby obtaining a modified SBR for silica.

### <Examples and Comparative Examples>

In accordance with each of the blending formulas shown in Table 1, the chemicals other than the sulfur and the vulcanization accelerator were kneaded under a condition of 150°C for five minutes by using a 1.7-L Banbury mixer manufactured by Kobe Steel, Ltd., to obtain a kneaded product. Next, the sulfur and the vulcanization accelerator were added to the obtained kneaded product, and the mixture was kneaded under a condition of 80°C for five minutes by using an open roll, to obtain an unvulcanized rubber composition.

The obtained unvulcanized rubber composition was press-vulcanized under a condition of 170°C for ten minutes, to obtain a vulcanized rubber composition.

In addition, the obtained unvulcanized rubber composition was formed into the shape of a cap tread and attached together with other tire members, to produce an unvulcanized tire. The unvulcanized tire was press-vulcanized under a condition of 170°C for ten minutes, thereby obtaining a test tire (size: 195/65R15).

The obtained vulcanized rubber compositions and test tires were evaluated as described below. The results are shown in Table 1.

The blending contents of the Examples and the Comparative Examples were adjusted such that the hardnesses thereof fell within a given range.

### <Low Fuel Consumption Performance>

The tanδ of the above vulcanized rubber composition was measured under a condition of a temperature of 50°C, a frequency of 10 Hz, an initial strain of 10%, and a dynamic strain of 2%, by using the viscoelasticity spectrometer VES manufactured by Iwamoto Seisakusho Co., Ltd. The tanδ was indicated as an index (low fuel consumption performance index) with the result of Comparative Example 1 being 100. A higher index indicates a smaller tanδ and more excellent low fuel consumption performance. When the index was not less than 105, the low fuel consumption performance was determined as favorable.

### <Wet Grip Performance>

The test tires were mounted to an FR car produced in Japan with an engine displacement of 2000 cc, and the car was actually caused to run ten laps on a test course of a wet asphalt road surface. A test driver made sensory evaluations for stability of control at steering during the running, and the stability was indicated as an index with the result of Comparative Example 1 being 100. A higher index indicates more excellent wet grip performance. When the index was not less than 105, the wet grip performance was determined as favorable.

### <Wear Resistance>

The test tires were mounted to an FR car produced in Japan with an engine displacement of 2000 cc, and the car was actually caused to run on a test course of a dry asphalt road surface. A position at which a control tire was mounted to the car and a position at which the test tire was mounted to the car, were swapped at intervals of 1000 km, so that causes of wear in car running were averaged. The groove depth (8.0 mm in the case of a new tire) of the tire tread rubber in the test tire was measured after 30000-km running, and was indicated as an index with the result of Comparative Example 1 being 100. A higher index indicates a smaller amount of worn rubber and more excellent wear resistance. When the index was not less than 105, the wear resistance was determined as favorable.

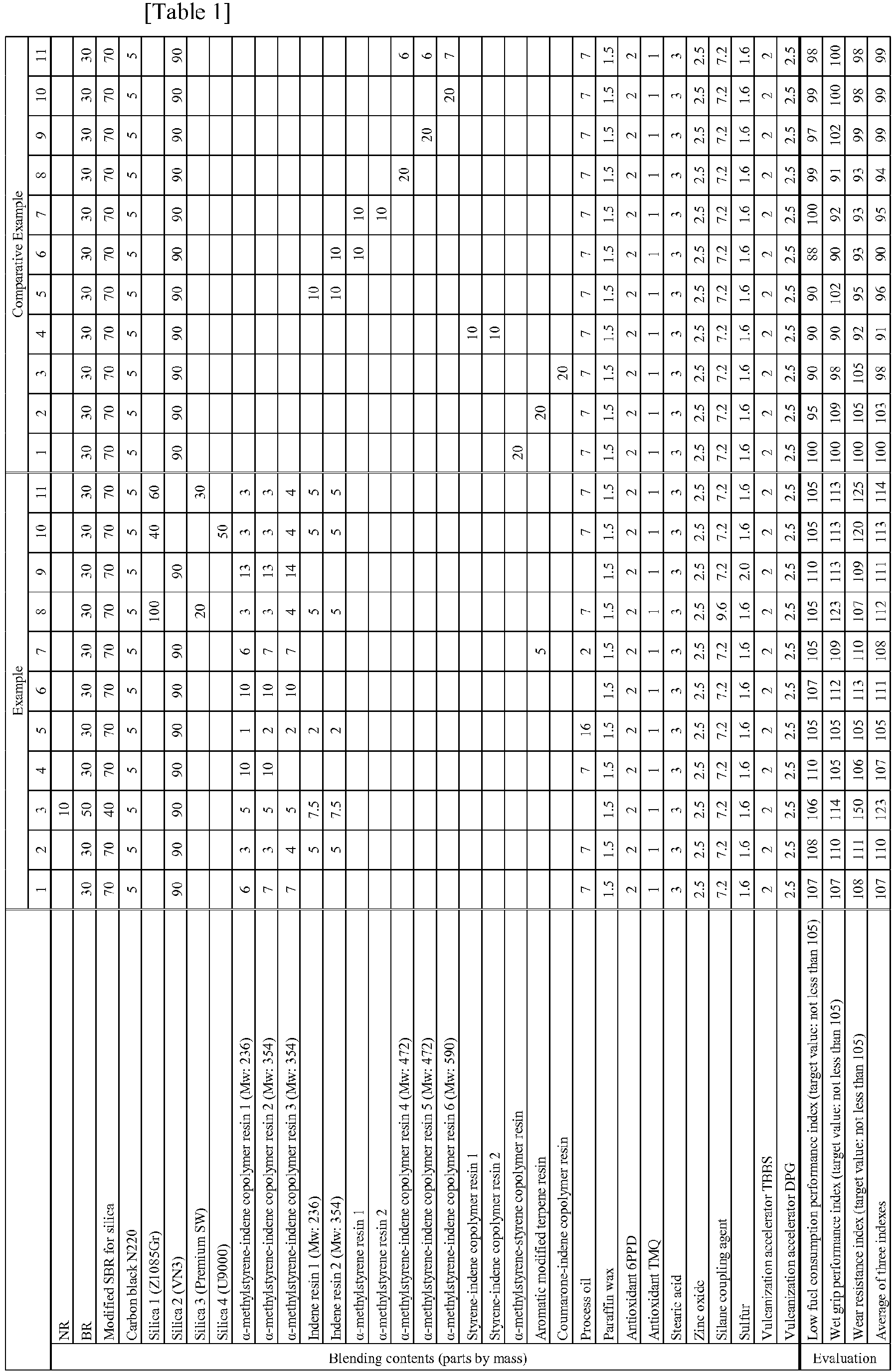

According to Table 1, the low fuel consumption performance, the wet grip performance, and the wear resistance of the Examples were improved in a balanced manner. The Examples each contained: a rubber component including a styrene-butadiene rubber having a styrene content not less than 25% by mass; an α-methylstyrene-indene copolymer resin having a weight-average molecular weight not greater than 400; and silica. In the Examples, per 100 parts by mass of the rubber component, the amount of the α-methylstyrene-indene copolymer resin was 0.1 to 100 parts by mass and the amount of the silica was not less than 80 parts by mass.

On the other hand, the performance characteristics did not tend to be improved, but rather tended to be deteriorated when an α-methylstyrene-indene copolymer resin having a weight-average molecular weight greater than 400 was used (Comparative Examples 8 to 11).

## Claims

1. A rubber composition for a tire, the rubber composition containing:
a rubber component including a styrene-butadiene rubber having a styrene content not less than 25% by mass;
an α-methylstyrene-indene copolymer resin having a weight-average molecular weight not greater than 400; and
silica, wherein,
per 100 parts by mass of the rubber component, an amount of the α-methylstyrene-indene copolymer resin is 0.1 to 100 parts by mass and an amount of the silica is not less than 80 parts by mass.

2. The rubber composition for a tire according to claim 1, wherein
the rubber composition contains an indene resin having a weight-average molecular weight not greater than 400.

3. The rubber composition for a tire according to claim 1 or 2, wherein
an amount of the styrene-butadiene rubber in 100% by mass of the rubber component is not less than 10% by mass.

4. The rubber composition for a tire according to any one of claims 1 to 3, wherein
the rubber composition contains a silica having a nitrogen adsorption specific surface area of 170 to 300 m²/g.

5. The rubber composition for a tire according to any one of claims 1 to 4, wherein
an α-methylstyrene unit content of the α-methylstyrene-indene copolymer resin is 15 to 70% by mol.

6. The rubber composition for a tire according to any one of claims 1 to 5, wherein the styrene-butadiene rubber is a modified styrene-butadiene rubber having a functional group that interacts with silica.

7. The rubber composition for a tire according to any one of claims 1 to 6, wherein the styrene-butadiene rubber is an end-modified styrene-butadiene rubber having a functional group that interacts with silica at an end thereof.

8. The rubber composition for a tire according to claim 6 or 7, wherein the functional group is an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group.

9. The rubber composition for a tire according to any one of claims 1 to 8, wherein the styrene-butadiene rubber is modified with a modifier represented by the following formula: 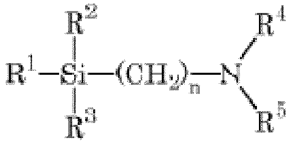 wherein R¹, R², and R³ are the same or different from each other, and each represent an alkyl group, an alkoxy group, a silyloxy group, an acetal group, a carboxyl group, a mercapto group, or a derivative thereof, R⁴ and R⁵ are the same or different from each other, and each represent a hydrogen atom or an alkyl group, R⁴ and R⁵ may be linked together to form a ring structure together with the nitrogen atom and n represents an integer from 1 to 5.

10. A pneumatic tire produced by using the rubber composition according to any one of claims 1 to 9.

## Patentansprüche

1. Kautschukzusammensetzung für einen Reifen, wobei die Kautschukzusammensetzung enthält:
eine Kautschukkomponente, welche einen Styrol-Butadien-Kautschuk mit einem Styrolgehalt von nicht weniger als 25 Massenprozent umfasst;
ein α-Methylstyrol-Inden-Copolymer-Harz mit einem gewichtsmittleren Molekulargewicht, welches nicht größer ist als 400; und
Siliciumdioxid, wobei
pro 100 Massenteile der Kautschukkomponente eine Menge des α-Methylstyrol-Inden-Copolymer-Harzes 0,1 bis 100 Massenteile beträgt und eine Menge des Siliciumdioxids nicht weniger als 80 Massenteile beträgt.

2. Kautschukzusammensetzung für einen Reifen nach Anspruch 1, wobei
die Kautschukzusammensetzung ein Indenharz mit einem gewichtsmittleren Molekulargewicht enthält, welches nicht größer ist als 400.

3. Kautschukzusammensetzung für einen Reifen nach Anspruch 1 oder 2, wobei
eine Menge des Styrol-Butadien-Kautschuks in 100% Massenprozent der Kautschukkomponente nicht weniger als 10 Massenprozent beträgt.

4. Kautschukzusammensetzung für einen Reifen nach einem der Ansprüche 1 bis 3, wobei
die Kautschukzusammensetzung ein Siliciumdioxid mit einer spezifischen Stickstoffadsorptionsoberfläche von 170 bis 300 m²/g enthält.

5. Kautschukzusammensetzung für einen Reifen nach einem der Ansprüche 1 bis 4, wobei
ein Gehalt an α-Methylstyrol-Einheiten des α-Methylstyrol-Inden-Copolymer-Harzes 15 bis 70 Molprozent beträgt.

6. Kautschukzusammensetzung für einen Reifen nach einem der Ansprüche 1 bis 5, wobei der Styrol-Butadien-Kautschuk ein modifizierter Styrol-Butadien-Kautschuk ist, welcher eine funktionelle Gruppe aufweist, die mit Siliciumdioxid wechselwirkt.

7. Kautschukzusammensetzung für einen Reifen nach einem der Ansprüche 1 bis 6, wobei der Styrol-Butadien-Kautschuk ein endmodifizierter Styrol-Butadien-Kautschuk ist, welcher an seinem Ende eine funktionelle Gruppe aufweist, die mit Siliciumdioxid wechselwirkt.

8. Kautschukzusammensetzung für einen Reifen nach Anspruch 6 oder 7, wobei die funktionelle Gruppe eine Aminogruppe, eine Amidgruppe, eine Silylgruppe, eine Alkoxysilylgruppe, eine Isocyanatgruppe, eine Iminogruppe, eine Imidazolgruppe, eine Harnstoffgruppe, eine Ethergruppe, eine Carbonylgruppe, eine Oxycarbonylgruppe, eine Mercaptogruppe, eine Sulfidgruppe, eine Disulfidgruppe, eine Sulfonylgruppe, eine Sulfinylgruppe, eine Thiocarbonylgruppe, eine Ammoniumgruppe, eine Imidgruppe, eine Hydrazogruppe, eine Azogruppe, eine Diazogruppe, eine Carboxylgruppe, eine Nitrilgruppe, eine Pyridylgruppe, eine Alkoxygruppe, eine Hydroxylgruppe, eine Oxygruppe und eine Epoxygruppe ist.

9. Kautschukzusammensetzung für einen Reifen nach einem der Ansprüche 1 bis 8, wobei der Styrol-Butadien-Kautschuk mit einem durch die folgende Formel dargestellten Modifizierungsmittel modifiziert ist: 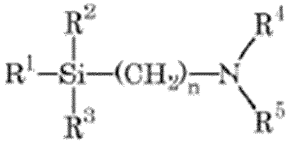 wobei R¹, R² und R³ gleich oder voneinander verschieden sind und jeweils eine Alkylgruppe, eine Alkoxygruppe, ein Silyloxygruppe, eine Acetalgruppe, eine Carboxylgruppe, eine Mercaptogruppe, oder ein Derivat derselben darstellen, R⁴ und R⁵ gleich oder voneinander verschieden sind und jeweils ein Wasserstoffatom oder eine Alkylgruppe darstellen, R⁴ und R⁵ miteinander verbunden sein können, um zusammen mit dem Stickstoffatom eine Ringstruktur zu bilden, und n für eine ganze Zahl von 1 bis 5 steht.

10. Luftreifen, hergestellt unter Verwendung der Kautschukzusammensetzung nach einem der Ansprüche 1 bis 9.

## Revendications

1. Composition de caoutchouc pour pneumatique, la composition de caoutchouc contenant :
un composant de caoutchouc comportant un caoutchouc styrène-butadiène ayant une teneur en styrène non inférieure à 25 % en masse ;
une résine copolymère α-méthylstyrène-indène ayant un masse moléculaire moyenne en poids non supérieure à 400 ; et
de la silice, dans laquelle,
pour 100 parties en masse du composant de caoutchouc, une quantité de résine copolymère α-méthylstyrène-indène est de 0,1 à 100 parties en masse et une quantité de silice est non inférieure à 80 parties en masse.

2. Composition de caoutchouc pour pneumatique selon la revendication 1, ladite composition de caoutchouc contenant une résine d'indène ayant une masse moléculaire moyenne en poids non supérieure à 400.

3. Composition de caoutchouc pour pneumatique selon la revendication 1 ou la revendication 2, dans laquelle la quantité de caoutchouc styrène-butadiène dans 100 % en masse du composant de caoutchouc est non inférieure à 10 % en masse.

4. Composition de caoutchouc pour pneumatique selon l'une quelconque des revendications 1 à 3,
ladite composition de caoutchouc contenant une silice ayant une surface spécifique mesurée par adsorption d'azote de 170 à 300 m²/g.

5. Composition de caoutchouc pour pneumatique selon l'une quelconque des revendications 1 à 4, dans laquelle
une teneur en unités α-méthylstyrène de la résine copolymère α-méthylstyrène-indène est de 15 à 70 % par mole.

6. Composition de caoutchouc pour pneumatique selon l'une quelconque des revendications 1 à 5, dans laquelle le caoutchouc styrène-butadiène est un caoutchouc styrène-butadiène modifié ayant un groupe fonctionnel qui interagit avec la silice.

7. Composition de caoutchouc pour pneumatique selon l'une quelconque des revendications 1 à 6,
dans laquelle le caoutchouc styrène-butadiène est un caoutchouc styrène-butadiène modifié en extrémité ayant un groupe fonctionnel qui interagit avec la silice à une de ses extrémités.

8. Composition de caoutchouc pour pneumatique selon la revendication 6 ou la revendication 7, dans laquelle le groupe fonctionnel est un groupe amine, un groupe amide, un groupe silyle, un groupe alcoxysilyle, un groupe isocyanate, un groupe imine, un groupe imidazole, un groupe urée, un groupe éther, un groupe carbonyle, un groupe oxycarbonyle, un groupe mercapto, un groupe sulfure, un groupe disulfure, un groupe sulfonyle, un groupe sulfinyle, un groupe thiocarbonyle, un groupe ammonium, un groupe imide, un groupe hydrazo, un groupe azo, un groupe diazo, un groupe carboxyle, un groupe nitrile, un groupe pyridyle, un groupe alcoxy, un groupe hydroxyle, un groupe oxy et un groupe époxy.

9. Composition de caoutchouc pour pneumatique selon l'une quelconque des revendications 1 à 8, dans laquelle le caoutchouc styrène-butadiène est modifié avec un agent de modification représenté par la formule suivante : 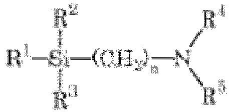 où R¹, R², et R³ sont identiques ou différents les uns des autres, et chacun représente un groupe alkyle, un groupe alcoxy, un groupe silyloxy, un groupe acétal, un groupe carboxyle, un groupe mercapto, ou un dérivé de ceux-ci, R⁴ et R⁵ sont identiques ou différents les uns des autres, et chacun représente un atome d'hydrogène ou un groupe alkyle, R⁴ et R⁵ peuvent être reliés ensemble pour former une structure en anneau conjointement avec l'atome d'azote et n représente un nombre entier de 1 à 5.

10. Pneumatique produit en utilisant la composition de caoutchouc selon l'une quelconque des revendications 1 à 9.
